# EUROPÄISCHE PATENTSCHRIFT

(11) **EP 3 404 770 B1**
(45) Veröffentlichungstag und Bekanntmachung des Hinweises auf die Patenterteilung: **29.07.2020**
(21) Anmeldenummer: 18170863.7
(22) Anmeldetag: 04.05.2018
(51) Int. Cl.: H01R 4/18, H01R 43/048, H01R 11/12, H01R 4/34, H01R 9/28

(54) **KLEMMENBRETT ZUM BEFESTIGEN VON ELEKTRISCHEN LEITUNGEN UND VERFAHREN ZUM BEFESTIGEN VON ELEKTRISCHEN LEITUNGEN AN EINEM KLEMMENBRETT**
CLAMP BOARD FOR FIXING ELECTRICAL LINES AND METHOD FOR THE MOUNTING OF ELECTRICAL LINES TO A CLAMP BOARD
BORNIER DE FIXATION DE LIGNES ÉLECTRIQUES ET PROCÉDÉ DE FIXATION DE LIGNES ÉLECTRIQUES À UN BORNIER

(30) Priorität: 15.05.2017 DE 102017110527
(43) Veröffentlichungstag der Anmeldung: 21.11.2018
(73) Patentinhaber: Valeo Siemens eAutomotive Germany GmbH, 91056 Erlangen (DE)
(72) Erfinder: Keßler, Bernhard, 97705 Burkardroth (DE); Hellmuth, Stephan, 97616 Bad Neustadt (DE); Eiling, Monique, 97616 Bad Neustadt (DE); Dieterich, Sebastian, 97616 Bad Neustadt (DE)
(74) Vertreter: Dr. Gassner & Partner mbB

(56) Entgegenhaltungen:
- WO-A1-2008/152069
- DE-A1-102005 007 203
- DE-A1-102013 013 151
- DE-U1- 20 001 463
- DE-U1- 29 912 797
- DE-U1-202013 006 781
- JP-A- H07 192 791

## Beschreibung

Die Erfindung betrifft ein Klemmenbrett zum Befestigen von elektrischen Leitungen, mit wenigstens einer Gewindebohrung, um ein Anschlusselement einer elektrischen Leitung mittels einer in die Gewindebohrung einschraubbaren oder eingeschraubten Schraube zu befestigen.

Derartige Klemmenbretter, die auch als Klemmenanschlüsse bezeichnet werden, kommen beispielsweise bei Traktionsmotoren für Elektrofahrzeuge oder Hybridfahrzeuge zum Einsatz. Dort ist es erforderlich, drei mit dem Motor verbundene, jeweils einer Phase zugeordnete Leitungen mit den entsprechenden, mit einem Inverter verbundenen Leitungen zu verbinden. Bei derartigen Anwendungen steht nur ein begrenzter Bauraum zur Verfügung. Aus Kostengründen wird angestrebt, herkömmliche Hochvolt-Steckverbinder durch direktes Anschließen der Leitungen an das Klemmenbrett zu ersetzen. Wenn ein Traktionsmotor in einem Fahrzeug eingesetzt wird, besteht zumeist die Anforderung, dass die motorseitigen Leitungen, genauer gesagt die Kabelschuhe der motorseitigen Leitungen, zuerst am Klemmenbrett fixiert werden müssen. Der Anschluss der inverterseitigen Leitungen beziehungsweise Kabelschuhe erfolgt später. Bisher wurden Klemmenbretter verwendet, bei denen die motorseitigen und die inverterseitigen Kabelschuhe separat verschraubt waren. Die motorseitigen Kabelschuhe konnten somit vorab fixiert werden, bevor im Fahrzeug die inverterseitigen Kabelschuhe verschraubt wurden. Aufgrund des beschränkten Bauraums ist dies jedoch nicht immer möglich. WO 2008/152069 A1 offenbart ein Klemmenbrett gemäss dem Oberbegriff des Anspruchs 1. Der Erfindung liegt daher die Aufgabe zugrunde, ein Klemmenbrett zum Befestigen von elektrischen Leitungen anzugeben, die einerseits mit dem Motor und andererseits mit dem Inverter verbunden sind, wobei das Klemmenbrett geringe Anforderungen an den Bauraum stellt.

Zur Lösung dieser Aufgabe ist bei einem Klemmenbrett der eingangs genannten Art erfindungsgemäß vorgesehen, dass es einen die Gewindebohrung aufweisenden Einsatz umfasst und das Anschlusselement und die Gewindebohrung durch plastische Verformung miteinander verbunden sind.

Anspruch 1 offenbart das erfindungsgemäße Klemmenbrett. Die Erfindung beruht auf der Erkenntnis, dass eine platzsparende und wirtschaftliche Befestigung von elektrischen Leitungen an einem Klemmenbrett erfolgen kann, indem ein Anschlusselement durch ein Fügeverfahren mit dem Klemmenbrett verbunden wird, ohne das Anschlusselement mit dem Klemmenbrett zu verschrauben. Demnach wird das Anschlusselement einer ersten Leitung durch plastische Verformung fest mit dem die Gewindebohrung aufweisenden Einsatz verbunden.

Die erste elektrische Leitung ist vorzugsweise mit dem Motor verbunden. Vorzugsweise sind drei derartige elektrische Leitungen, die mit dem Motor verbunden sind, vorhanden. Jede Leitung ist einer Phase des als Drehstrommotors ausgebildeten Motors zugeordnet. Das erfindungsgemäße Klemmenbrett weist den Vorteil auf, dass keine Schraube oder dergleichen in die Gewindebohrung eingeschraubt werden muss, um die erste elektrische Leitung mit der Gewindebohrung zu verbinden. Die plastische Verformung erfolgt so, dass die Funktion der Gewindebohrung dadurch nicht beeinträchtigt wird. D. h. auch nach dem Verbinden des Anschlusselements der ersten elektrischen Leitung mit der Gewindebohrung ist es möglich, eine Schraube oder ein anderes, ein Außengewinde aufweisendes Befestigungsmittel in die Gewindebohrung einzuschrauben. Die Befestigung der zweiten elektrischen Leitung, die vorzugsweise mit dem Inverter verbunden ist, kann zu einem späteren Zeitpunkt erfolgen, insbesondere nachdem der Motor und der Inverter in der Fahrzeugkarosserie montiert worden sind.

Bei dem erfindungsgemäßen Klemmenbrett ist der die Gewindebohrung aufweisende Einsatz zylinderförmig ausgebildet. Der Einsatz kann aus einem anderen Werkstoff als das Klemmenbrett bestehen. Vorzugsweise besteht das Klemmenbrett aus einem elektrisch isolierenden Material, beispielsweise aus einem Kunststoffmaterial. Der die Gewindebohrung aufweisende Einsatz kann aus einem metallischen Werkstoff oder einer Metalllegierung bestehen, beispielsweise aus einer Stahllegierung oder einer Kupferlegierung.

Im Rahmen der Erfindung ist es vorgesehen, dass der Einsatz in eine Ausnehmung des erfindungsgemäßen Klemmenbretts eingesetzt ist und einen von einer Fläche des Klemmenbretts abstehenden Endabschnitt aufweist, der durch die plastische Verformung mit dem Anschlusselement verbunden ist. Der Einsatz umfasst somit zusätzlich zu dem die Gewindebohrung bildenden Abschnitt den abstehenden Endabschnitt, der bei herkömmlichen Gewindebohrungen oder Gewindeeinsätzen nicht vorhanden ist. Dieser abstehende Endabschnitt kann nach dem Positionieren des Anschlusselements, das sich am Ende der elektrischen Leitung befindet, plastisch verformt werden. Durch die plastische Verformung wird das Anschlusselement formschlüssig mit dem Endabschnitt verbunden. Die plastische Verformung wird so durchgeführt, dass die Gewindebohrung nach wie vor zugänglich ist und das Einschrauben einer Schraube oder eines ähnlichen Bauteils ermöglicht, um eine zweite elektrische Leitung, vorzugsweise eine mit dem Inverter verbundene Leitung, an derselben Stelle zu befestigen.

Im Rahmen der Erfindung wird es bevorzugt, dass die plastische Verformung durch ein Crimpverfahren und/oder durch Bördeln hergestellt ist. Für sämtliche erwähnten Verfahren werden entsprechende Werkzeuge verwendet, die dazu geeignet sind, den Endabschnitt und/oder das Anschlusselement der elektrischen Leitung plastisch zu verformen. Durch die plastische Verformung wird ein Formschluss und/oder ein Kraftschluss zwischen dem Endabschnitt der Gewindebohrung und dem Anschlusselement hergestellt, wodurch beide Komponenten fest miteinander verbunden werden.

Vorzugsweise kann es bei dem erfindungsgemäßen Klemmenbrett vorgesehen sein, dass durch die plastische Verformung ein Hinterschnitt zwischen dem Anschlusselement und der Gewindebohrung, insbesondere dem Einsatz, hergestellt ist.

Mit besonderem Vorteil kann es bei dem erfindungsgemäßen Klemmenbrett vorgesehen sein, dass durch die plastische Verformung eine elektrisch leitende Verbindung zwischen dem Anschlusselement und der Gewindebohrung hergestellt ist. Die auf diese Weise hergestellte elektrisch leitende Verbindung ermöglicht einen besonders guten und verlustarmen elektrischen Kontakt.

Eine bevorzugte Variante des erfindungsgemäßen Klemmenbretts sieht vor, dass das Anschlusselement als Kabelschuh ausgebildet ist und eine an den Durchmesser der Gewindebohrung angepasste Ausnehmung aufweist. Ein derartiger Kabelschuh kann mit einem Kabelende der elektrischen Leitung verpresst sein. Der Kabelschuh kann einen plattenförmigen, eine Ausnehmung aufweisenden Abschnitt aufweisen. Die Ausnehmung ist vorzugsweise kreisförmig ausgebildet. Als Alternative dazu kann ein Kabelschuh auch eine z. B. halbkreisförmige Außenkontur aufweisen.

Es liegt auch im Rahmen der Erfindung, dass das Klemmenbrett eine erste elektrische Leitung umfasst, deren Anschlusselement durch plastische Verformung mit der Gewindebohrung verbunden ist, sowie eine zweite, ein Anschlusselement aufweisende elektrische Leitung, die durch eine in die Gewindebohrung eingeschraubte Schraube mit dem Klemmenbrett verbunden ist. Der Vorteil dieser Anordnung ist darin zu sehen, dass zunächst die erste elektrische Leitung durch plastisches Verformen mit dem Klemmenbrett verbunden und vormontiert wird. Die erste elektrische Leitung ist dabei vorzugsweise die mit dem Motor verbundene Leitung. Anschließend kann die zweite, vorzugsweise mit dem Inverter verbundene Leitung mittels der Schraube an dem Klemmenbrett befestigt werden.

Bei dem erfindungsgemäßen Klemmenbrett wird es besonders bevorzugt, dass es mehrere, vorzugsweise drei, Gewindebohrungen aufweist. Jede Gewindebohrung kann zur Befestigung der beiden, einerseits mit dem Inverter und anderseits mit dem Motor verbundenen Leitungen verwendet werden, wobei jede der drei Gewindebohrungen einer Phase zugeordnet ist.

Daneben betrifft die Erfindung ein Verfahren zum Befestigen von elektrischen Leitungen an einem Klemmenbrett gemäss Anspruch 8.

Gemäß einer Weiterbildung des erfindungsgemäßen Verfahrens erfolgt das plastische Verformen durch ein Crimpverfahren und/oder Bördeln.

Eine Variante des erfindungsgemäßen Verfahrens sieht vor, dass eine erste elektrische Leitung verwendet wird, deren Anschlusselement durch plastische Verformung mit der Gewindebohrung verbunden wird, sowie eine zweite, ein Anschlusselement aufweisende elektrische Leitung, die durch eine in die Gewindebohrung eingeschraubte Schraube mit dem Klemmenbrett verbunden wird.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine perspektivische Ansicht eines an einen Elektromotor angeschlossenen Klemmenbretts,
- Fig. 2: ein Detail des Klemmenbretts,
- Fig. 3: eine geschnittene Ansicht eines Einsatzes mit einer Gewindebohrung,
- Fig. 4: das in Fig. 2 gezeigte Klemmenbrett nach der Montage der Leitungen,
- Fig. 5: eine ähnliche Ansicht wie Fig. 3 mit einem angebrachten Kabelschuh,
- Fig. 6: das Klemmenbrett mit inverterseitigen Kabelschuhen, und
- Fig. 7: das in Fig. 6 gezeigte Klemmenbrett mit befestigten elektrischen Leitungen.

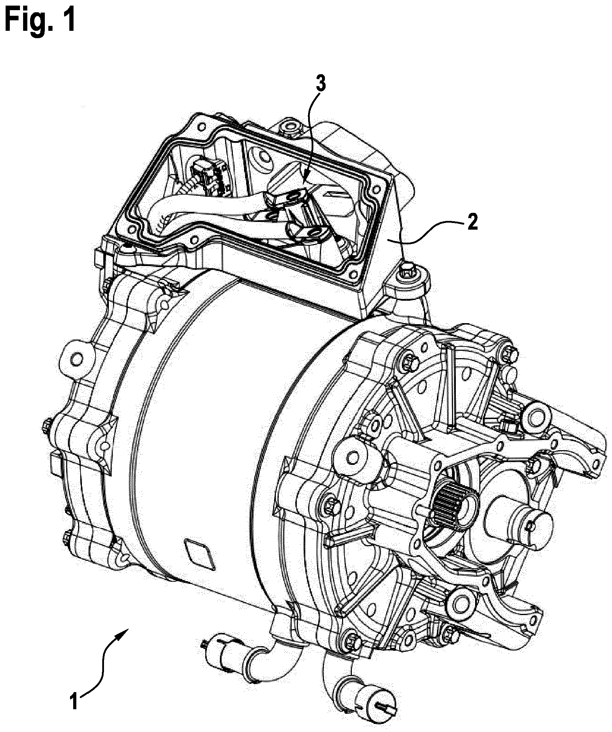

Fig. 1 ist eine perspektivische Ansicht und zeigt einen Elektromotor 1, der als Traktionsmotor eines Fahrzeugs ausgebildet ist. An der Außenseite des Elektromotors 1 ist ein Gehäuse 2 befestigt, das ein Klemmenbrett 3 für elektrische Leitungen umfasst. In Fig. 1 erkennt man, dass an dem Klemmenbrett 3 insgesamt drei elektrische Leitungen befestigt sind, die mit dem Elektromotor 1 verbunden sind. Das Klemmenbrett 3 dient dazu, die mit dem Elektromotor 1 verbundenen Leitungen anschließend mit weiteren Leitungen (nicht gezeigt), die mit dem Inverter verbunden sind, zu verbinden. Anschließend wird das in Fig. 1 geöffnete Gehäuse 2 durch einen Deckel (nicht gezeigt) verschossen.

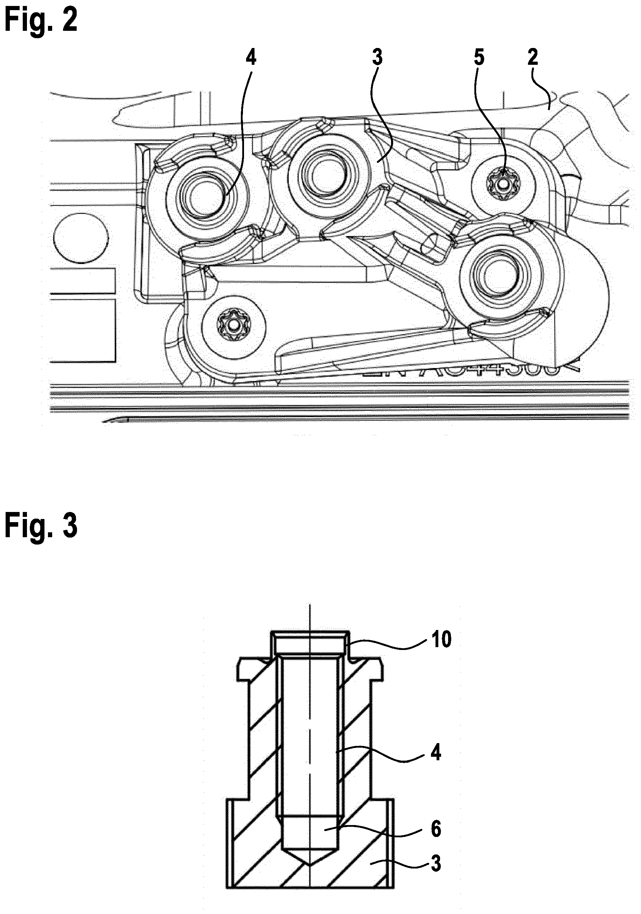

Fig. 2 ist eine vergrößerte Ansicht eines Details des Klemmenbretts 3, das sich in dem Gehäuse 2 verbindet. Das Klemmenbrett 3 umfasst drei Einsätze 4, die jeweils eine Gewindebohrung aufweisen. Die Einsätze 4 sind als zylinderförmige Gewindebuchsen ausgebildet. Jeder Einsatz 4 befindet sich in einer Ausnehmung des Klemmenbretts 3. Das Klemmenbrett 3 ist mittels Schrauben 5 mit dem Gehäuse 2 verbunden.

Fig. 3 ist eine geschnittene Ansicht eines Einsatzes 4, der als Gewindebuchse ausgebildet und in eine Ausnehmung 6 des Klemmenbretts 3 eingesetzt ist. Der Einsatz 4 ist in die Ausnehmung 6 eingepresst und fest mit dem Klemmenbrett 3 verbunden.

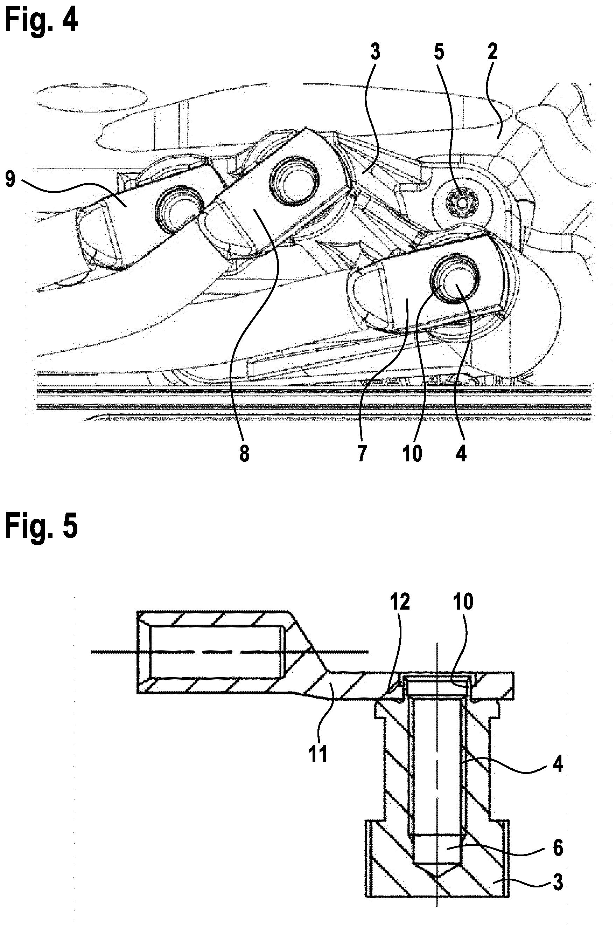

Fig. 4 ist eine ähnliche Ansicht wie Fig. 2 und zeigt das Klemmenbrett 3 nach dem Anbringen von Kabelschuhen 7, 8, 9 von motorseitigen Leitungen.

In den Fig. 2 und 3 erkennt man, dass ein Einsatz 4 einen von der Ausnehmung 6 abstehenden Endabschnitt 10 aufweist, der dazu dient, durch plastische Verformung eine formschlüssige Verbindung zwischen einem Kabelschuh und dem Einsatz 4 herzustellen. In dem dargestellten Ausführungsbeispiel erfolgt die plastische Verformung durch Crimpen. Dabei wird der aus einem metallischen Werkstoff hergestellte Einsatz 4 so verformt, dass sein abstehender Endabschnitt 10 radial nach außen gedrückt wird.

Fig. 5 ist eine ähnliche Ansicht wie Fig. 3 und zeigt den Einsatz 4 mit einem aufgesetzten Kabelschuh 11 einer motorseitigen Leitung. Beim plastischen Verformen wird der Endabschnitt 10 radial nach außen gedrückt, wodurch er fest mit dem Kabelschuh 11 verbunden wird. Der Kabelschuh 11 weist eine Stufe 12 auf, die nach dem plastischen Verformen einen Hinterschnitt bildet, der ein Lösen des Kabelschuhes 11 verhindert. Die plastische Verformung erfolgt in diesem Ausführungsbeispiel durch Crimpen. Durch das Crimpen wird über den Kabelschuh 11 sowohl die beschriebene mechanische Verbindung als auch eine elektrisch leitende Verbindung zwischen dem Einsatz 4 und der mit dem Kabelschuh 11 verbundenen motorseitigen Leitung hergestellt.

Das in den Fig. 4 und 5 gezeigte Klemmenbrett 3 mit den daran befestigten motorseitigen Leitungen 7, 8, 9 bildet eine vormontierte Einheit.

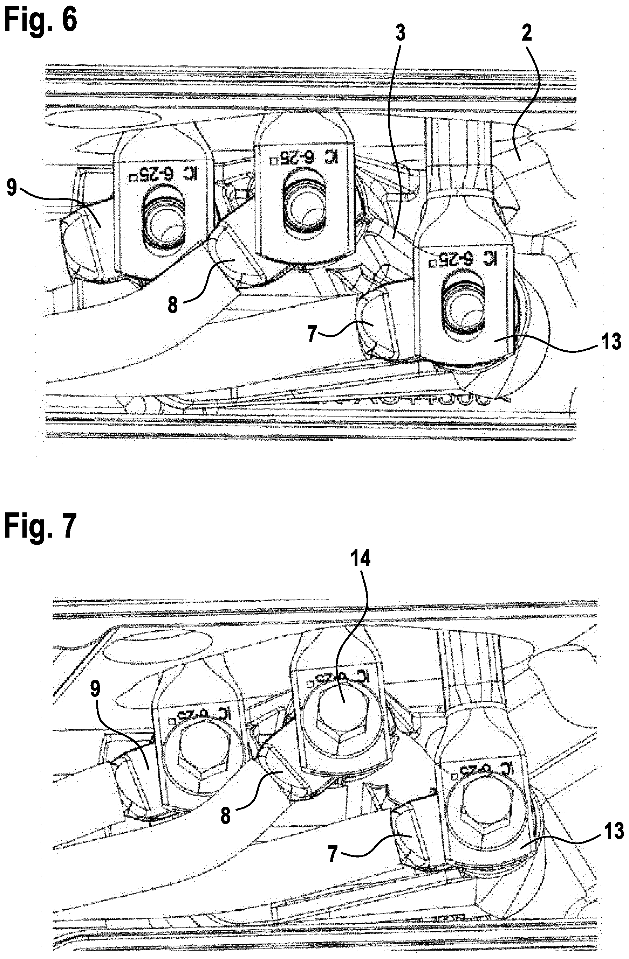

Fig. 6 zeigt das Klemmenbrett 3 nach der Montage von inverterseitigen Kabelschuhen 13. Zur Montage der inverterseitigen Kabelschuhe 13, die jeweils mit inverterseitigen Leitungen (nicht gezeigt) verbunden sind, werden die inverterseitigen Kabelschuhe 13 auf den Einsätzen 4 positioniert, so dass Öffnungen der inverterseitigen Kabelschuhe 13 mit den Einsätzen 4 fluchten. Anschließend werden - wie in Fig. 7 gezeigt ist - Schrauben 14 in die Einsätze 4 geschraubt, wodurch die motorseitigen Kabelschuhe 11 und die jeweiligen inverterseitigen Kabelschuhe 13 fest mit dem Klemmenbrett 3 verbunden werden.

Das beschriebene Klemmenbrett 3 weist den Vorteil auf, dass die motorseitigen Leitungen 7, 8, 9 durch Crimpen mit den als Gewindebuchsen ausgebildeten Einstätzen 4 vormontiert werden können. Die nachfolgende Montage der inverterseitigen Kabelschuhe 13 kann besonders einfach erfolgen, ohne dass zuvor eine Verschraubung oder dgl. gelöst werden muss.

### Bezugszeichenliste

- 1: Elektromotor
- 2: Gehäuse
- 3: Klemmenbrett
- 4: Einsatz
- 5: Schraube
- 6: Ausnehmung
- 7, 8, 9: motorseitige Leitung
- 10: Endabschnitt
- 11: motorseitiger Kabelschuh
- 12: Stufe
- 13: inverterseitiger Kabelschuh
- 14: Schraube

## Patentansprüche

1. Klemmenbrett (3) zum Befestigen von elektrischen Leitungen (7, 8, 9), mit einem ersten Anschlusselement (11) für eine elektrische Leitung und mit wenigstens einer Gewindebohrung, um ein weiteres Anschlusselement (13) einer elektrischen Leitung mittels einer in die Gewindebohrung einschraubbaren Schraube (14) zu befestigen, **dadurch gekennzeichnet, dass** das Klemmenbrett (3) einen zylinderförmigen, die Gewindebohrung aufweisenden Einsatz (4) umfasst, der in eine Ausnehmung (6) des Klemmenbretts (3) eingesetzt ist und einen von einer Fläche des Klemmenbretts (3) abstehenden Endabschnitt (10) aufweist, der durch plastische Verformung mit dem Anschlusselement (11) verbunden ist.

2. Klemmenbrett (3) nach Anspruch 1, **dadurch gekennzeichnet, dass** die plastische Verformung durch ein Crimpverfahren und/oder durch Bördeln hergestellt ist.

3. Klemmenbrett (3) nach einem der vorangehenden Ansprüche, **dadurch gekennzeichnet, dass** durch die plastische Verformung ein Hinterschnitt zwischen dem Anschlusselement und dem Einsatz (4) hergestellt ist.

4. Klemmenbrett (3) nach einem der vorangehenden Ansprüche, **dadurch gekennzeichnet, dass** durch die plastische Verformung eine elektrisch leitende Verbindung zwischen dem Anschlusselement und der Gewindebohrung hergestellt ist.

5. Klemmenbrett (3) nach einem der vorangehenden Ansprüche, **dadurch gekennzeichnet, dass** das Anschlusselement als Kabelschuh (11) ausgebildet ist und eine an den Durchmesser der Gewindebohrung angepasste Ausnehmung aufweist.

6. Klemmenbrett (3) nach einem der vorangehenden Ansprüche, **dadurch gekennzeichnet, dass** es eine erste elektrische Leitung (7, 8, 9) umfasst, die mit dem Anschlusselement (11) verbunden ist, sowie eine zweite, ein Anschlusselement (13) aufweisende elektrische Leitung, die durch eine in die Gewindebohrung eingeschraubte Schraube (14) mit dem Klemmenbrett (3) verbunden ist.

7. Klemmenbrett (3) nach einem der vorangehenden Ansprüche, **dadurch gekennzeichnet, dass** es mehrere, vorzugsweise drei, Gewindebohrungen aufweist.

8. Verfahren zum Befestigen von elektrischen Leitungen (7, 8, 9) an einem Klemmenbrett (3), mit den folgenden Schritten:
- Erzeugen einer Gewindebohrung in dem Klemmenbrett (3) durch Einsetzen eines die Gewindebohrung aufweisenden Einsatzes (4) in eine Ausnehmung des Klemmenbretts (3),
- Positionieren eines Anschlusselements einer elektrischen Leitung (7, 8, 9) oberhalb des Einsatzes (4) des Klemmenbretts (3),
- Verbinden des Anschlusselements und des Einsatzes (4) durch plastisches Verformen, indem
ein Einsatz (4) verwendet wird, der einen von der Oberfläche des Klemmenbretts (3) abstehenden Endabschnitt (10) aufweist, der zum Verbinden mit dem Anschlusselement plastisch verformt wird.

9. Verfahren nach Anspruch 8, **dadurch gekennzeichnet, dass** das plastische Verformen durch Crimpen und/oder Bördeln erfolgt.

10. Verfahren nach Anspruch 8 oder 9, **dadurch gekennzeichnet, dass** eine erste elektrische Leitung (7, 8, 9) verwendet wird, deren Anschlusselement durch plastische Verformung mit der Gewindebohrung verbunden wird, sowie eine zweite, ein Anschlusselement aufweisende elektrische Leitung, die durch eine in die Gewindebohrung eingeschraubte Schraube (14) mit dem Klemmenbrett (3) verbunden wird.

## Claims

1. A terminal board (3) for fastening electrical lines (7, 8, 9), with a first connecting element (11) for an electrical line and with at least one threaded hole so as to fasten another connecting element (13) of an electrical line by way of a screw (14) that can be screwed into the threaded hole, **characterized in that** the terminal board (3) comprises a cylindrical insert (4) including the threaded hole, which is inserted into a cut-out (6) of the terminal board (3) and comprises an end section (10) that projects from a surface area of the terminal board (3), whereby the end section (10) is joined to the connecting element (11) by way of plastic deformation.

2. The terminal board (3) according to claim 1, **characterized in that** the plastic deformation is created by way of a crimping method and/or by way of flanging.

3. The terminal board (3) according to any one of the preceding claims, **characterized in that** an undercut is created between the connecting element and the insert (4) as a result of the plastic deformation.

4. The terminal board (3) according to any one of the preceding claims, **characterized in that** an electrically conducting connection is established between the connecting element and threaded hole as a result of the plastic deformation.

5. The terminal board (3) according to any one of the preceding claims, **characterized in that** the connecting element is designed as a cable lug (11) and includes a cut-out that is adapted to the diameter of the threaded hole.

6. The terminal board (3) according to any one of the preceding claims, **characterized by** comprising a first electrical line (7, 8, 9), which is connected to the connecting element (11), and a second electrical line, which comprises a connecting element (13) and is joined to the terminal board (3) by way of a screw (14) that is screwed into the threaded hole.

7. The terminal board (3) according to any one of the preceding claims, **characterized by** comprising a plurality of, and preferably three, threaded holes.

8. A method for fastening electrical lines (7, 8, 9) to a terminal board (3), comprising the following steps:
- generating a threaded hole in the terminal board (3) by inserting an insert (4), which includes the threaded hole, into a cut-out of the terminal board (3);
- positioning a connecting element of an electrical line (7, 8, 9) over the insert (4) of the terminal board (3);
- joining the connecting element and the insert (4) by way of plastic deformation, whereby an insert (4) is used which comprises an end section (10) that projects from the surface of the terminal board (3) and is plastically deformed so as to be joined to the connecting element.

9. The method according to claim 8, **characterized in that** the plastic deformation takes place by way of crimping and/or flanging.

10. The method according to claim 8 or 9, **characterized in that** a first electrical line (7, 8, 9) is used, the connecting element of which is joined to the threaded hole by way of plastic deformation, and a second electrical line, which comprises a connecting element and is joined to the terminal board (3) by way of a screw (14) that is screwed into the threaded hole.

## Revendications

1. Bornier (3) de fixation de lignes électriques (7, 8, 9) comprenant un premier élément de raccordement (11) pour une ligne électrique et au moins un trou taraudé pour fixer un autre élément de raccordement (13) d'une ligne électrique au moyen d'une vis (14) qui peut être vissée dans le trou taraudé, **caractérisé en ce que** le bornier (3) comprend un insert (4) de forme cylindrique comportant le trou taraudé, ledit insert étant inséré dans un évidement (6) du bornier (3) et comportant une section finale (10) saillant d'une surface du bornier (3) qui est reliée par déformation plastique à l'élément de raccordement (11).

2. Bornier (3) selon la revendication 1, **caractérisé en ce que** la déformation plastique est réalisée par un procédé de sertissage et/ou par bordage.

3. Bornier (3) selon l'une des revendications précédentes, **caractérisé en ce qu'**une contre-dépouille est réalisée entre l'élément de raccordement et l'insert (4) par la déformation plastique.

4. Bornier (3) selon l'une des revendications précédentes, **caractérisé en ce qu'**une connexion électriquement conductrice est réalisée entre l'élément de raccordement et le trou taraudé par la déformation plastique.

5. Bornier (3) selon l'une des revendications précédentes, **caractérisé en ce que** l'élément de raccordement est réalisé sous forme de cosse de câble (11) et comporte un évidement adapté au diamètre du trou taraudé.

6. Bornier (3) selon l'une des revendications précédentes, **caractérisé en ce qu'**il comporte une première ligne électrique (7, 8, 9) qui est raccordée à l'élément de raccordement (11) ainsi qu'une seconde ligne électrique comportant un élément de raccordement (13), laquelle ligne est raccordée au bornier (3) par une vis (14) vissée dans le trou taraudé.

7. Bornier (3) selon l'une des revendications précédentes, **caractérisé en ce qu'**il comporte plusieurs, de préférence trois, trous taraudés.

8. Procédé de fixation de lignes électriques (7, 8, 9) sur un bornier (3) comprenant les étapes suivantes :
- réalisation d'un trou taraudé dans le bornier (3) par insertion d'un insert (4) comportant le trou taraudé dans un évidement du bornier (3),
- positionnement d'un élément de raccordement d'une ligne électrique (7, 8, 9) au-dessus de l'insert (4) du bornier (3),
- raccordement de l'élément de raccordement et de l'insert (4) par déformation plastique en utilisant un insert (4) qui comporte une section finale (10) saillant de la surface du bornier (3) qui est déformée plastiquement pour le raccordement à l'élément de raccordement.

9. Procédé selon la revendication 8, **caractérisé en ce que** la déformation plastique s'effectue par sertissage et/ou bordage.

10. Procédé selon la revendication 8 ou 9, **caractérisé en ce qu'**une première ligne électrique (7, 8, 9) est utilisée dont l'élément de raccordement est relié au trou taraudé par déformation plastique ainsi qu'une seconde ligne électrique comportant un élément de raccordement, ladite ligne électrique étant reliée au bornier (3) par une vis (14) vissée dans le trou taraudé.
